# EUROPEAN PATENT APPLICATION

(11) **EP 3 040 538 A1**
(43) Date of publication of application: **06.07.2016**
(21) Application number: 14840301.7
(22) Date of filing: 20.08.2014
(51) Int. Cl.: F02D 29/00, F02D 29/02, F02D 45/00

(54) **ENGINE CONTROL DEVICE**

(30) Priority: 30.08.2013 JP 2013179902
(71) Applicant: Aisin Seiki Kabushiki Kaisha, Kariya-shi, Aichi 448-8650 (JP)
(72) Inventor: TAMARU, Daisuke, Kariya-shi, Aichi-ken 448-8650 (JP)
(74) Representative: Kramer Barske Schmidtchen Patentanwälte PartG mbB
(86) International application number: PCT/JP2014/071784
(87) International publication number: WO 2015/029855

(57) **Abstract**

An engine control apparatus (100) includes an information acquisition portion (102) acquiring output information indicating a rotation speed of an output shaft (31) of an engine (2), input information indicating a rotation speed of an input shaft (32) of a transmission (5) to which a rotary force of the output shaft is transmitted via a clutch (4), and connection information indicating that the clutch establishes a connected state, a detection portion (104) detecting a rotation speed difference between the engine side and the transmission side when the clutch is in the connected state, on the basis of a comparison between the output information and the input information, a storage portion (106) storing detection information corresponding to the rotation speed difference, and a control portion (108) limiting output of the engine on the basis of the detection information so that the rotation speed difference does not occur.

## Description

### TECHNICAL FIELD

This invention relates to an engine control apparatus including a clutch protection function.

### BACKGROUND ART

Varieties of technologies for preventing damage and an excessive wear from occurring at a drive train on a vehicle are suggested. For example, by controlling output torque of an engine as a function of a gear ratio of a transmission, component parts constituting the drive train are prevented from being damaged and the drive train is protected against the excessive wear, and accordingly a vehicle performance is enhanced.

### DOCUMENT OF PRIOR ART

### PATENT DOCUMENT

Patent document 1: JP2000-352328A

### OVERVIEW OF INVENTION

### PROBLEM TO BE SOLVED BY INVENTION

According to the above-mentioned patent document, however, the output torque is calculated by using a design value of each of the parts, and therefore changes with time of the parts are not considered which are associated with use of the vehicle. For example, on a vehicle mounted with a general manual transmission, a clutch switching transmission and disconnection of power is provided between an engine and a transmission. States of the clutch include three states, that is, a connected state, a disconnected state and a slip state which corresponds to an intermediate state between the connected state and the disconnected state and in which the clutch is in contact while slipping. The clutch comes to be in the slip state in a process of switching from the disconnected state to the connected state. In addition, for example, at a start-up of the vehicle, the slip state is maintained by intentionally keeping an operation amount of the clutch in the intermediate state in order to transmit an engine power while maintaining engine rotation. As a result, in association with the use of the vehicle, wear is generated at a clutch disc serving as a contact and separation mechanism portion of the clutch. As the wear progresses, a defect occurs more easily in which the engine torque is not transmitted to the transmission side sufficiently even though the clutch is in the connected state. In this case, a driver steps on the accelerator further and increases engine output in an attempt to supplement the insufficiency of torque (without understanding that the clutch is in the worn state). With this operation, the engine power which has not been transmitted further generates the slip of the clutch, and consequently leading to a vicious cycle of facilitating the wear. Therefore, a countermeasure needs to be taken to restrict the progression of the wear at the clutch, in consideration of the changes overtime time occurring to the component parts.

### MEANS FOR SOLVING PROBLEM

An engine control apparatus related to an embodiment includes an information acquisition portion acquiring output information indicating a rotation speed of an output shaft of an engine, input information indicating a rotation speed of an input shaft of a transmission to which a rotary force of the output shaft is transmitted via a clutch, and connection information indicating that the clutch establishes a connected state in which the output shaft side and the input shaft side are connected to each other, a detection portion detecting a rotation speed difference between the engine side and the transmission side when the clutch is in the connected state, on the basis of a comparison between the output information and the input information, a storage portion storing detection information corresponding to the rotation speed difference, and a control portion limiting output of the engine on the basis of the detection information so that the rotation speed difference does not occur. According to this aspect, by detecting the rotation speed difference between the rotation speed of the output shaft of the engine and the rotation speed of the input shaft of the transmission in a case where the clutch is in the connected state, it can be detected whether or not a loss, that is, "slip", is generated at the clutch provided between the engine and the transmission. The slip of the clutch occurs when a drive power transmitted between the engine and the transmission exceeds a static frictional force. Therefore, the detection information corresponding to the rotation speed difference at the time of occurrence of the rotation speed difference is stored, and output of the engine is controlled so that the rotation speed difference does not occur. Accordingly, the clutch can be restricted from slipping during a subsequent transmission of the drive power, thereby reducing progression of the wear and protecting the clutch.

The storage portion of the engine control apparatus according to the embodiment stores output torque of the engine at the time of occurrence of the rotation speed difference which is equal to or more than a predetermined value between the output shaft and the input shaft as the detection information. According to this aspect, it can be prevented that the output of the engine is restricted by the occurrence of a slight rotation speed and thus a running performance is reduced. In addition, the limitation of the output of the engine is performed by conducting a torque control, the slip of the clutch which causes the rotation speed difference can be prevented accurately.

The storage portion of the engine control apparatus according to the embodiment retains the detection information after a vehicle electric power supply is lost. According to this aspect, the detection information is retained even in a case where the vehicle electric power supply is turned off. Consequently, when the vehicle is started up again at the next time, the rotation difference between the output shaft and the input shaft can be prevented from occurring even at an initial state of the start-up, which attributes to the restriction of the wear caused by the slip of the clutch.

In a case where the control portion limits the output of the engine on the basis of the detection information, the control portion of the engine control apparatus according to the embodiment relaxes the limitation on the output of the engine in a case where the detection information is not updated in an increasing direction for a predetermined time period. The state of the clutch may differ depending on usage environments. For example, as temperature of the clutch decreases, a contact resistance of the clutch recovers temporarily and the slip may stop. In such a case, the output limitation of the engine is relaxed to increase the driver power supplied to the transmission side, thereby contributing to a smooth running.

The control portion of the engine control apparatus according to the embodiment releases the limitation on the output of the engine that is based on the detection information only in a case where a running state of a vehicle satisfies a predetermined condition. While the vehicle is running, it may be ideal to prioritize an increase in the drive power over the restriction of the wear of the clutch. For example, when turning at an intersection and/or when running on an upgrade road, the limitation on the output is released to realize the smooth running.

In a case where the control portion is controlling the output of the engine on the basis of the detection information, the control portion of the engine control apparatus according to the embodiment causes content of the limitation to be outputted at an alert apparatus. For example, a specific content of the limitation may be outputted by, for example, indicating a message, a mark and/or a character with the use of a display apparatus, and by outputting sound or voice, a warning tone and/or so forth with the use of a loud speaker, for example. By outputting the content of the limitation, even in a case where the actual output is less relative to an output request of the driver (an opening degree of an accelerator pedal, for example), a sense of discomfort can be alleviated.

The control portion of the engine control apparatus according to the embodiment calculates the rotation speed difference in a case where a gear state of the transmission is other than a neutral and the clutch is in an unoperated state. In this case, the execution of the detection of the rotation speed difference can be restricted in a case where the slip is generated intentionally by, for example, establishing a half-engaged clutch state. As a result, reliability of detection can be enhanced, the detection whether or not a loss, that is, the "slip", is generated at the clutch disposed between the engine and the transmission.

In addition, in a case where slip is not generated at the clutch, the control portion stores on the storage portion a maximum design torque which is transmittable by the clutch, the maximum design torque being stored as a limit torque. According to this aspect, in a case where the slip is not generated at the clutch, the torque transmission can be realized in a high efficiency.

In addition, in a case where the control portion is limiting the output of the engine, the control portion of the engine control apparatus according to the embodiment outputs the content of the limitation at the same time with outputting a design capability which is transmittable by the clutch. According to this aspect, in a case where the engine output is being limited, a user is allowed to grasp a degree of the limitation specifically.

In addition, the control portion of the engine control apparatus according to the embodiment releases the limitation on the output of the engine in a case where an amount of change in an amount of a stepping operation of an accelerator pedal per unit of time exceeds a predetermined position or in a case where an average amount of the stepping operation of the accelerator pedal in a predetermined time period exceeds a predetermined value. According to this aspect, for example, in a case where the driver requires a large torque (drive power) intentionally, running of the vehicle can be temporarily realized in which a priority is given to the request of the driver, for example.

### BRIEF DESCRIPTION OF DRAWINGS

[Fig. 1] Fig. 1 is a schematic view illustrating an example of a configuration of a vehicle including an engine control apparatus according to an embodiment.
[Fig. 2A] Fig. 2A is a view explaining an example of change in an amount of control at the vehicle including the engine control apparatus according to the embodiment, which illustrates a relation between a rotation speed of an output shaft of an engine and a rotation speed of an input shaft of a transmission.
[Fig. 2B] Fig. 2B is a view explaining an example of change in an amount of control at the vehicle including the engine control apparatus according to the embodiment, which illustrates a relation between torque outputs of the engine and clutch torque.
[Fig. 2C] Fig. 2C is a view explaining an example of change in an amount of control at the vehicle including the engine control apparatus according to the embodiment, which illustrates an operation amount of an accelerator pedal.
[Fig. 3] Fig. 3 is a schematic view illustrating a display example in a case where an alert apparatus displays that a control by the engine control apparatus according to the embodiment is ongoing.
[Fig. 4] Fig. 4 is a flowchart showing an example of a procedure of a control by the engine control apparatus according to the embodiment.

### MODE FOR CARRYING OUT THE INVENTION

An exemplary embodiment of the invention will be disclosed hereunder. A configuration of the embodiment described hereunder, and an operation and results (advantages and effects) brought by the configuration are adapted as an example. The invention may be realized with a configuration other than the configurations disclosed in the following embodiment. Further, various advantages and effects (which includes derivative advantages and effects) which are obtained by a basic configuration may be obtained in a configuration other than the configurations disclosed in the following embodiment.

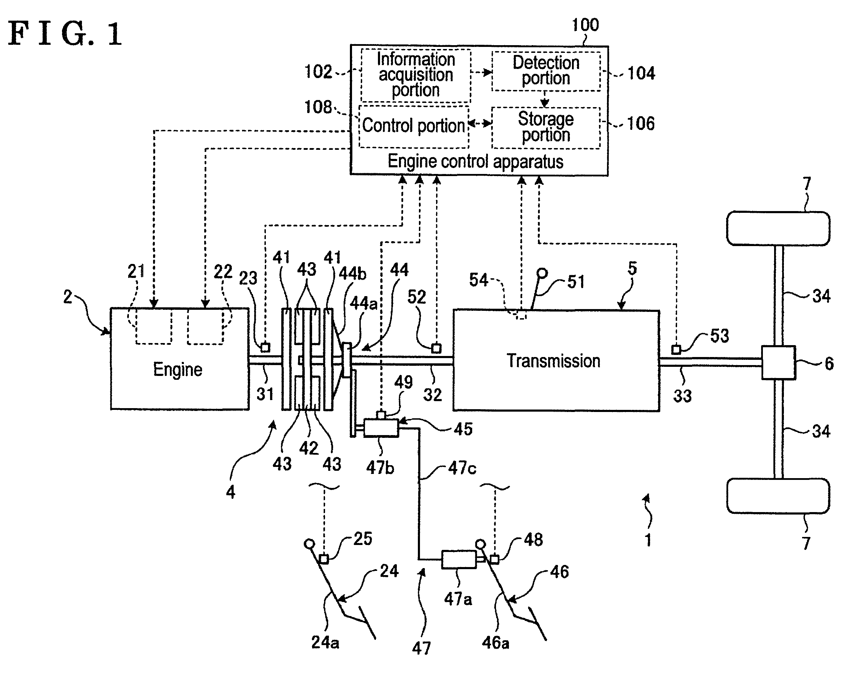

Fig. 1 is a schematic view illustrating an example of a configuration of a vehicle 1 including an engine control apparatus 100 according to the embodiment.

In the embodiment, for example, the vehicle 1 is a four wheel automobile and a drive source is an engine 2. At the vehicle 1, output of the engine 2 is transmitted to wheels 7 arranged at end portions of an axle 34 via, for example, a clutch 4, a transmission 5 and a differential gear 6. The configuration illustrated in Fig. 1 shows a case where the transmission 5 is a manual transmission (MT). The vehicle 1 is configured as a rear-wheel-drive vehicle in the embodiment, however, the vehicle 1 can be configured as a front-wheel-drive vehicle or a four-wheel drive vehicle (an all-wheel-drive vehicle).

The engine control apparatus 100 is configured as an ECU (Electronic Control Unit), for example. The ECU includes, for example, an MCU (Micro Control Unit), a power supply circuit, a driver (a controller), an input and output converter circuit and/or an input and output protection circuit (which are not shown). The ECU is configured by electric components (not shown) implemented on a circuit board. The circuit board is accommodated in a case (not shown). The MCU includes, for example, a CPU (Central Processing Unit), a primary storage (a memory), an interface (input and output devices), a communication device and/or a bus (which are not shown). The primary storage is, for example, a ROM (Read Only Memory) and/or a RAM (Random Access Memory). At the MCU, the CPU performs arithmetic processing in accordance with program installed on, for example, the primary storage, and can control each portion, including, the engine 2.

The engine control apparatus 100 includes an information acquisition portion 102, a detection portion 104, a storage portion 106 and a control portion 108, for example. The information acquisition portion 102 acquires various detection information (detection values) from, for example, each of sensors 23, 25, 48, 49, 52 to 54 and an actuator 45, which will be described below. The information acquisition portion 102 mainly acquires output information indicating a rotation speed of an output shaft 31 of the engine 2, input information indicating a rotation speed of an input shaft 32 of the transmission 5 to which a rotary force of the output shaft 31 is transmitted via the clutch 4, and connection information indicating that a side of the output shaft 31 and a side of the input shaft 32 are brought in a connected state by the clutch 4. The detection portion 104 detects a rotation speed difference between an output side of the engine 2 and an input side of the transmission 5 on the basis of comparison of the output information related to the engine 2 and the input information related to the transmission 5 to each other, mainly when the clutch 4 is in the connected state. The storage portion 106 can be configured as an auxiliary storage apparatus and corresponds to, for example, a flash memory. The storage portion 106 mainly stores the detection information which corresponds to the rotation speed difference detected by the detection portion 104. The control portion 108 limits the output of the engine 2 so that the rotation speed difference does not occur between before and after the clutch 4, mainly on the basis of the detection information stored at the storage portion 106. The engine control apparatus 100 performs a normal engine control in addition to a limiting control (a clutch protection control) that is described above.

The engine 2 is an internal combustion engine using fuel including gasoline, light oil, alcohol and hydrogen, for example. The engine 2 is a port injection type engine and/or a cylinder injection type engine (a direct injection type), for example. The engine 2 is controlled by the engine control apparatus 100. The engine control apparatus 100 can control, for example, engine torque of the engine 2 and/or the rotation speed (the number of rotations per unit time) of the engine 2, by controlling, for example, an opening degree of a throttle valve 21 of the engine 2 and/or an injection amount of a fuel injection valve 22 of the engine 2. In addition, as described above, in a case where the rotation speed difference is generated between the input and the output of the clutch 4, the engine control apparatus 100 also performs the control that limits the output of the engine 2 so that such a rotation speed difference does not occur.

The sensor 23 for detecting the rotation speed of the output shaft 31 is provided at the output shaft 31 of the engine 2. From a signal obtained from the sensor 23, the engine control apparatus 100 can obtain the rotation speed serving as the output information of the engine 2. The rotation speed can be presented as the number of rotations and/or a rotation angle. The sensor 52 for detecting the rotation speed of the input shaft 32 is provided at the input shaft 32 of the transmission 5. From a signal obtained from the sensor 52, the engine control apparatus 100 can obtain the rotation speed serving as the input information that is to be inputted to the transmission 5. Also in this case, the rotation speed can be presented as the number of rotations and/or the rotation angle.

The engine control apparatus 100 changes the torque, the rotation speed, and so forth of the engine 2 in response to displacement (for example, a position, a stroke an amount of operation) of a movable member 24a (for example, an arm) of an operation portion 24 (The operation portion 24 is, for example, an accelerator pedal. The operation portion 24 will be hereinafter referred to as an accelerator pedal 24.). The sensor 25 for detecting the displacement of the movable member 24a is provided to correspond to the movable member 24a. The engine control apparatus 100 obtains the displacement of the movable member 24a from the signal of the sensor 25. The engine control apparatus 100 may obtain data indicating the displacement of the movable member 24a from the sensor 25. In a case where the rotation speed difference is occurring at the clutch 4, the engine control apparatus 100 may limit the output of the engine 2 regardless of the signal from the sensor 25.

The clutch 4 is a dry type single plate clutch, for example. The clutch 4 is in any of the connected state (a transmission state) in which the torque (rotation) is transmitted from the output shaft 31 of the engine 2 to the input shaft 32 of the transmission 5, a disconnected state (a non-transmission state) in which the torque is not transmitted from the output shaft 31 to the input shaft 32, and a half-engaged clutch state (a slip state) in which the output shaft 31 side and the input shaft 32 side slip relative to each other. The clutch 4 includes a rotary member 41 (including a flywheel and a pressure plate, for example) and a rotary member 42 (including a clutch disc, for example). The rotary member 41 rotates integrally with the output shaft 31 of the engine 2 and the rotary member 42 rotates integrally with the input shaft 32 of the transmission 5. A friction member 43 is disposed between the rotary members 41 and 42. At the clutch 4, a transmission status (a transmission rate, a degree of transmission) of the torque (rotation) from the output shaft 31 to the input shaft 32 changes as a contact state of the rotary members 41, 42 (for example, the rotary member 41 and the friction member 43) changes. The movable member 44 changes a position (a position, a distance, a proximity state, a separated state, relative to each other in an axial direction) of one of the rotary members (the rotary member 42 in the embodiment) relative to the other of the rotary members (the rotary member 41 in the embodiment). The movable member 44 includes a member 44a (for example, a release bearing) and a member 44b (for example, a diaphragm spring). The actuator 45 (for example, a piston mechanism, a linear actuator, a motor, a movement mechanism and/or a drive mechanism) moves the movable member 44, and accordingly the relative position of the rotary member 42 relative to the rotary member 41 changes.

Displacement (a position, a stroke, an operation amount) of the movable member 44 that is moved by the actuator 45 changes in response to displacement (a position, a stroke, an operation amount) of a movable member 46a (for example, an arm) of an operation portion 46 (For example, the operation portion 46 is a clutch pedal. The operation portion 46 will be hereinafter referred to as a clutch pedal 46.). In case of a hydraulic type, the actuator 45 is moved by a hydraulic mechanism 47. The hydraulic mechanism 47 includes a master cylinder 47a, a slave cylinder 47b and piping 47c. As a piston (not shown) of the master cylinder 47a is pushed by the movable member 46a, hydraulic pressure is generated. The generated hydraulic pressure is transmitted to a piston (not shown) of the slave cylinder 47b via an oil passage inside the piping 47c, and the piston of the slave cylinder 47b moves the movable member 44. In this configuration, the slave cylinder 47b is at least a part of the actuator 45.

The sensor 49 detects displacement of a movable portion inside the slave cylinder 47b. The displacement of the movable portion of the slave cylinder 47b corresponds to the displacement of the movable member 44. That is, the engine control apparatus 100 can obtain the displacement of the movable member 44 by a signal or data which are obtained from the sensor 49. In other words, the engine control apparatus 100 can determine whether the clutch 4 is in the connected state, the disconnected state or the intentional slip state (the half-engaged clutch) on the basis of the signal or the data which are obtained from the sensor 49.

The actuator 45 can be configured as an electrical actuator (for example, a linear actuator and/or a motor which are not shown). In this case, the actuator 45 is controlled by a clutch control apparatus that is not shown, and thus the movable member 44 moves, and consequently a contact and separation state of the clutch 4 changes. The sensor 48 detects displacement (a position) of the movable member 46a. That is, the clutch control apparatus can obtain the displacement of the movable member 46a by a signal and/or data which are obtained from the sensor 48. An amount of control of the actuator 45 that moves the movable member 44 corresponds to the displacement of the movable member 44. Accordingly, in a case where the clutch control portion controls the actuator 45 to move the clutch 4, the displacement of the movable portion can be obtained from the amount of control of the actuator 45. The clutch 4 is the dry type single plate clutch in the embodiment, however, the clutch 4 may be configured as other type of friction clutch (for example, a multiplate wet clutch).

In the embodiment, the transmission 5 (transmission) is configured as the manual transmission (MT) that changes speed according to a manual operation of the driver. The transmission 5 is a stepped stage transmission device and includes gear pairs corresponding to respective speed stages (gear stages). Each gear pair includes a drive gear which is rotatable integrally with the input shaft 32 (the input shaft of the transmission 5) and a driven gear which is rotatable integrally with an output shaft of the transmission 5, the output shaft which is connected to a side of a propeller shaft 33. Gear ratios (change gear ratios) of the gear pairs differ from one another. In the transmission 5, a state in which one of the plural gear pairs is selectively effective in response to an operation (displacement, a position) of a movable member 51 (for example, a shift lever), that is, a state in which the drive gear of the selected gear pair rotates integrally with the input shaft 32 and the driven gear meshing with the drive gear rotates integrally with the propeller shaft 33, is obtained. Accordingly, in the transmission 5, the rotation speed of the input shaft 32 is changed (increased or reduced) to a rotation speed which corresponds to the gear ratio of the selected gear pair. That is, a rotation speed of the propeller shaft 33 at the output side of the transmission 5 is determined depending on the rotation speed of the input shaft 32 at the input side of the transmission 5 and (the gear ratio of) the selected gear pair. In addition, the sensor 52 for detecting the rotation speed (the number of rotations) of the input shaft 32 and the sensor 53 for detecting the rotation speed (the number of rotations) of the propeller shaft 33 are provided so as to correspond to the input shaft 32 at the input side of the transmission 5 (the output side of the clutch 4) and the propeller shaft 33 at the output side of the transmission 5, respectively. The engine control apparatus 100 can obtain the rotation speeds (the numbers of rotations) of the input shaft 32 and the propeller shaft 33 from the signals obtained from the sensors 52 and 53. The engine control apparatus 100 may obtain data indicating the rotation speeds from the sensors 52 and 53.

From the signal obtained from the sensor 54 (for example, a shift sensor) provided at the transmission 5, the engine control apparatus 100 can obtain information or data which include (the gear stage of) the gear pair that has been selected or that is to be selected in the transmission 5, and start of the shift operation and completion of the shift operation, for example.

In a case where it can be determined that the clutch 4 is in the connected state on the basis of the signal from the sensor 49, the engine control apparatus 100 detects whether the clutch 4 in the connected state is slipping or not slipping. Specifically, at the detection portion 104, the engine control apparatus 100 compares the rotation speed of the engine 2 that the information acquisition portion 102 obtains from the sensor 23, that is, the rotation speed inputted to the clutch 4, and the rotation speed which is obtained from the sensor 52 and is inputted to the transmission 5, that is, the rotation speed outputted from the clutch 4, with each other. In a case where the clutch 4 is in the connected state and is not slipping, the rotation speed indicated by the signal from the sensor 23 and the rotation speed indicated by the signal from the sensor 52 match each other or agree with each other. To the contrary, when the clutch 4 is in the connected state and is slipping, the rotation speed indicated by the signal of the sensor 23 and the rotation speed indicated by the signal of the sensor 52 do not math each other. In particular, in a case where the slip is generated, the engine 2 is in a state of a pick-up response, and accordingly the rotation speed detected by the sensor 23 increases rapidly and disagreement of the rotation speeds appears clearly. The storage portion 106 stores the detection information that corresponds to the rotation speed difference. The storage portion 106 may store the rotation speed as the detection information. However, for making the limiting control of the engine 2 at the control portion 108 easier, it is ideal that the storage portion 106 stores output torque of the engine 2, the output torque which is at the time of occurrence of the rotation speed difference that is equal to or greater than a predetermined value between the output shaft 31 and the input shaft 32.

When starting the vehicle 1 having the above-described configuration, the clutch 4 is brought in the half-engaged clutch state, and thus a drive power of the engine 2 is gradually transmitted to the transmission 5. Also during running, the clutch 4 undergoes the half-engaged clutch state in the middle of transition from the disconnected state to the connected state. Because the rotary member 41 and the rotary member 42 are in contact with each other while slipping in the half-engaged clutch state, the friction member 43 that is in the actual contact is worn with use of the vehicle 1. In a case where the wear progresses beyond tolerance, it is known that a maximum transmittable torque that is transmittable at the clutch 4 (clutch torque) decreases. That is, even in a case where the driver is not stepping on the clutch pedal 46 and thus the clutch 4 is in a fully-connected state, "slip" occurs between the rotary member 41 and the friction member 43, and accordingly a torque transmission capability decreases. In a case where the "slip" is generated at the clutch 4, the driver cannot obtain a desired speed and/or acceleration as a result of the operation of the accelerator pedal 24 because the torque transmission capability has been decreased. Therefore, the driver tends to step on the accelerator pedal 24 even further. In consequence, the rotation speed of the output shaft 31 of the engine 2 increases further and a degree of slip of the clutch 4 increases. As a result, a vicious cycle is more likely to occur, in which the clutch 4 is heated up excessively, surface carbonization of the friction member 43 is induced, and accordingly the wear progresses further. In a case where the wear (damage) of the clutch 4 progresses, it may be difficult even to make the vehicle to run for itself to a dealer and/or a repair shop to have the friction member 43 replaced, for example.

In a case where the "slip" of the clutch 4 is detected, the engine control apparatus 100 of the embodiment limits the output of the engine 2 and performs the control so that the "slip" does not occur easily during running thereafter. As described above, the clutch torque of the clutch 4 is decreased due to the wear, and accordingly the clutch 4 slips. In other words, by reducing the torque transmitted at the clutch 4 to be lower than the torque at which the slip occurs, the "slip" stops. That is, the clutch 4 is protected by a forcible restriction of an agile running that promotes the wear of the clutch 4, so that a distance for which the vehicle can run for itself is increased, which makes a countermeasure including, repair, to be taken easily.

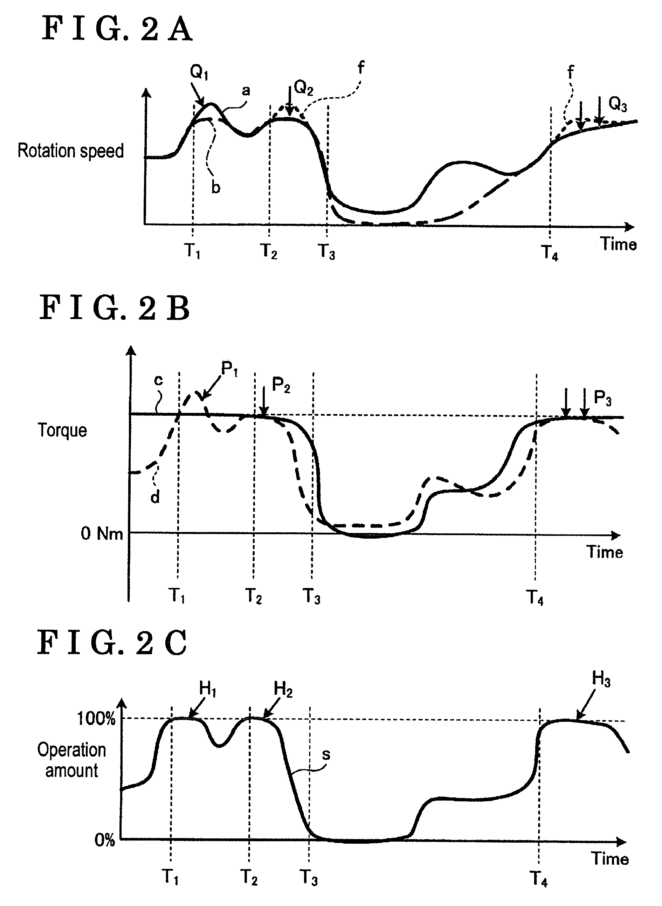

With reference to Figs. 2A to 2C, an overview of the limitation of the output torque of the engine 2 will be described from the occurrence of the "slip" of the clutch 4. Fig. 2A illustrates a relation between the rotation speed (the number of rotations: rpm) of the output shaft 31 of the engine 2 and the rotation speed (the number of rotations: rpm) of the input shaft 32 of the transmission 5. Fig. 2B illustrates a relation between the output torque of the engine 2 and the clutch torque of the clutch 4. Fig. 2C is a view indicating an operation amount of the accelerator pedal 24.

As described above, whether the clutch 4 is slipping or not is known by comparing the rotation speed inputted to the clutch 4 (the rotation speed of the output shaft 31) and the rotation speed outputted form the clutch 4 (the rotation speed of the input shaft 32) to each other when the clutch pedal 46 is not stepped on and thus the clutch 4 is in the fully-connected state. If it is detected, by the detection portion 104 of the engine control apparatus 100, that the rotation speed difference exists between the both shafts, the clutch 4 is slipping. The storage portion 106 stores the output torque of the engine 2, the output torque which is at the time of the detection of the slip (limit torque), and the output of the engine 2 is limited so that the limit torque is not exceeded in the running at and subsequent to the storage. In a case where the storage portion 106 stores the engine torque immediately at the time of generation of the rotation speed difference and reflects the engine torque to the control, the control portion 108 conducts an output limitation on the engine 2 even though the rotation speed difference is slight. Thus, it is ideal that the storage portion 106 makes the determination of "slip" in a case where the rotation speed difference which is equal to or greater than the predetermined value, for example, 50 rpm, occurs and it is ideal that the storage portion 106 stores the engine torque at the time of the occurrence of the slip. The predetermined value can be changed appropriately, and may be set at 100 rpm, for example. In addition, the predetermined value may be decided for each vehicle model, each type of the clutch 4, each type of the friction member 43 and each performance or characteristics of the engine 2, for example. In a case where the predetermined value is decided depending on the type of the clutch 4 and/or the type of the friction member 43, it is ideal that the predetermined value is changeable in accordance with the types of the clutch 4 and/or the friction member 43 after the types are changed due to the repair, for example. Further, the predetermined value may be changed on the basis of a way of driving of the driver, for example.

Figs. 2A to 2C show that the "slip" occurs to the clutch 4 around a time T1. In Fig. 2C, an operation amount s of the accelerator pedal 24 increases up to 100% around the time T1 (a region H1). In response to this, as illustrated in Fig. 2A, a rotation speed a (engine rotation speed: the solid line) of the output shaft 31 of the engine 2 exceeds a rotation speed b (the alternate long and short dash line) of the input shaft 32 of the transmission 5 (a region Q1). In Fig. 2B, an engine torque d (the broken line) exceeds a clutch torque c (the solid line) (a region P1). An upper limit of the clutch torque c, the upper limit which is transmittable, has been constant due to the wear of the clutch 4 (the region P1). That is, the "slip" is generated at the clutch 4 at this time. The information acquisition portion 102 of the engine control apparatus 100 acquires the information of the rotation speed a of the output shaft 31 and the rotation speed b of the input shaft 32. The detection portion 104 of the engine control apparatus 100 compares these rotation speeds to each other and makes the determination of the "slip" when the rotation speed difference is present. The storage portion 160 of the engine control apparatus 100 stores the engine torque d in a case where the rotation speed difference is present. The storage portion 106 stores the engine torque, for example, 185 Nm, which corresponds to the rotation speed a of the output shaft 31 at the time when the rotation speed difference reaches, for example, 50 rpm, as the detection information to prevent the "slip". Normally, the clutch torque can be calculated corresponding to an operation amount of the clutch pedal 46, however, the case of Fig. 2B shows that the current upper limit of the clutch torque is, for example, 185 Nm at which the slip occurred.

As shown between the time T1 to a time T2 of Fig. 2C, for example, even after the occurrence of the slip, by loosening the operation amount s of the accelerator pedal 24 to make the engine torque d to be equal to or less than the clutch torque c a as illustrated in Fig. 2B, the rotation speed a of the output shaft 31 and the rotation speed b of the input shaft 32 substantially match each other (refer to Fig. 2A). That is, the "slip" has been eliminated by the reduction of the engine torque. Subsequently, as illustrated in Fig. 2C, the driver steps on the accelerator pedal 24 up to 100% again around the time T2 (a region H2). However, because the storage portion 106 has already stored at the time T1, for example, 185 Nm as the limit torque of the engine 2 on the basis of the "slip", the control portion 108 limits the output torque of the engine 2 to the 185 Nm serving as the current limit torque as illustrated in Fig. 2B (a region P2). As a result, even though the driver steps on the accelerator pedal 24 to 100%, the rotation speed of the output shaft 31 is maintained to be substantially identical to the rotation speed of the input shaft 32 (a region Q2) as illustrated in Fig. 2A, and thus the "slip" of the clutch 4 is restricted. That is, the clutch protection control that restricts the progression of the wear of the clutch 4 can be realized.

In the aforementioned example, the limit torque is the torque at the time when the "slip" occurred. However, for example, a safety ratio may be "-10 Nm", for example, and the limit torque may be 175 Nm. By performing the clutch protection control in consideration of the safety ratio as described above, the "slip" can be reliably restricted even in a case where there is some error in the output torque due to characteristics of the engine 2 and/or in a case where a delay is caused in the control, for example.

In the aforementioned example, the "slip" is restricted from occurring again by making the engine torque not to exceed the limit torque. The engine control apparatus 100 can calculate the engine torque which the engine 2 intends to output, from the current rotation speed of the engine 2 (the rotation speed of the output shaft 31) and an opening degree of the accelerator pedal 24. Consequently, it may be configured in such a manner that the current rotation speed of the engine 2 and the opening degree of the accelerator pedal 24 are referred to, and the maximum output torque of the engine 2 is maintained at the limit torque in a case where the operation performed on the acceleration pedal 24 (the opening degree) exceeds the limit torque.

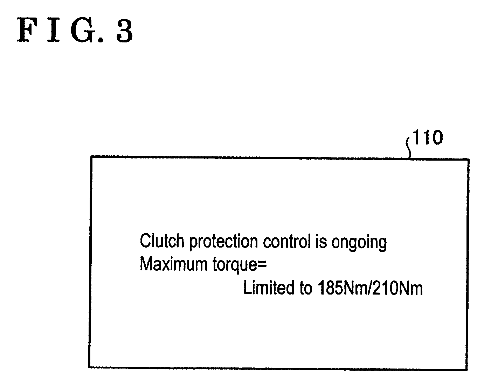

In a case where the output torque of the engine 2 is limited to restrict the "slip" of the clutch 4 as described above, the actual output torque of the engine 2 decreases relative to the operation of the acceleration pedal 24 performed by the driver. Therefore, speed and/or acceleration which are intended by the driver may not be realized, and accordingly the driver may feel a sense of discomfort. Thus, in the embodiment, it is ideal that, for example, an alert apparatus including a multi information display 110 which is arranged in an instrument panel indicates that "the clutch protection control" by the engine control apparatus 100 is ongoing as illustrated in Fig. 3. In the example illustrated in Fig. 3, in addition to the indication of "the clutch protection control is ongoing", at the same time, it is outputted and indicated that the limitation is imposed currently at 185 Nm while the maximum torque (the maximum capacity) of the clutch 4 is 210 Nm, as a specific content of the limitation. By notifying the driver with such an indication, even in a case where the output torque is less relative to the operation amount of the accelerator pedal 24, the sense of discomfort caused thereby can be alleviated. In addition, such an alert draws attention of the driver and allows the driver to easily recognize the state in which, for example, the repair is urgently needed. Also, information prompting the repair, for example, may be outputted.

The case shown in Fig. 3 is the example in which the message is indicated on the multi information display 110 of the alert apparatus, however, for example, an alarm lamp and/or an indicator may be indicated to obtain similar effects. In addition, the alert that "the clutch protection control is being performed" and/or the notification of the maximum torque may be made by an audio output. In addition, by alerting that "the clutch protection control is being performed" simply with a warning tone, a similar effect can be obtained.

To return to Figs. 2A to 2C, the engine torque c decreases (refer to Fig. 2B) when the driver turns off the accelerator pedal 24 at a time T3 (refer to Fig. 2C), for example. At that time, by stepping on the clutch pedal 46 to prevent the engine 2 from stalling, also the clutch torque c decreases (refer to Fig. 2B) in consequence. Similarly, the rotation speed a of the output shaft 31 and the rotation speed b of the input shaft 32 also decrease in response to the operation amount of the accelerator pedal 24 (refer to Fig. 2A). During this, the transmission 5 may be made to be in the neutral and the ignition may be turned off to lose an electric power supply of the vehicle 1. The storage portion 106 of the engine control apparatus 100 retains the value of the limit torque of the engine 2 which is stored before the electric power supply is lost, that is, 185 Nm in the aforementioned example. As a result, after the electric power supply of the vehicle 1 is restored, the engine torque d and the clutch torque c increase (refer to Fig. 2B) in association with the restart and the stepping on the accelerator pedal 24 (refer to Fig. 2C). In Fig. 2B, the value of the engine torque d and the value of the clutch torque c are reversed between the time T3 and a time T4. This is because the clutch torque c rapidly increases in association with the progress of the half-engaged clutch state while the clutch 4 is transitioning from the disconnected state to the connected state via the half-engaged clutch state.

Thereafter, the operation amount of the accelerator pedal 24 becomes 100% around the time T4 (a region H3). However, as described above, because the storage portion 106 has stored the limit torque (for example, 185 Nm), the engine torque d does not exceed the clutch torque c of which an upper limit torque is kept at constant due to the "slip", even though the operation amount of the accelerator pedal 24 becomes 100% (a region P3) as illustrated in Fig. 2B. That is, as indicated with a broken line f of Fig. 2A, the rotation speed of the output shaft 31 would normally increase corresponding to the operation amount of the accelerator pedal 24 and thus the rotation speed difference would be generated, however, the control is performed so that the rotation speed a of the output shaft 31 and the rotation speed b of the input shaft 32 are substantially identical to each other (a region Q3). That is, the slip of the clutch 4 is restricted and the engine control apparatus 100 performs a wear restriction (the protection control) of the clutch 4 even after the electric power supply is restored.

As described above, in a case where it is determined that the clutch 4 is slipping even though the clutch 4 is in the connected state, the engine control apparatus 100 of the embodiment limits the output torque of the engine 2 regardless of the operation amount of the accelerator pedal 24 so that the "slip" does not occur thereafter, that is, so that the rotation speed difference does not occur between the output shaft 31 and the input shaft 32 thereafter. As a result, on and after the execution of the torque limit control (the clutch protection control) by the engine control apparatus 100, the wear of the clutch 4 can be alleviated. In addition, by informing the driver that the protection control of the clutch 4 is being performed, the prompt necessity of the repair or the checking is indicated. In addition, even though the speed and/or the acceleration are decreased due to the torque limit control, the decrease in the speed and/or the acceleration is less likely felt as the sense of discomfort.

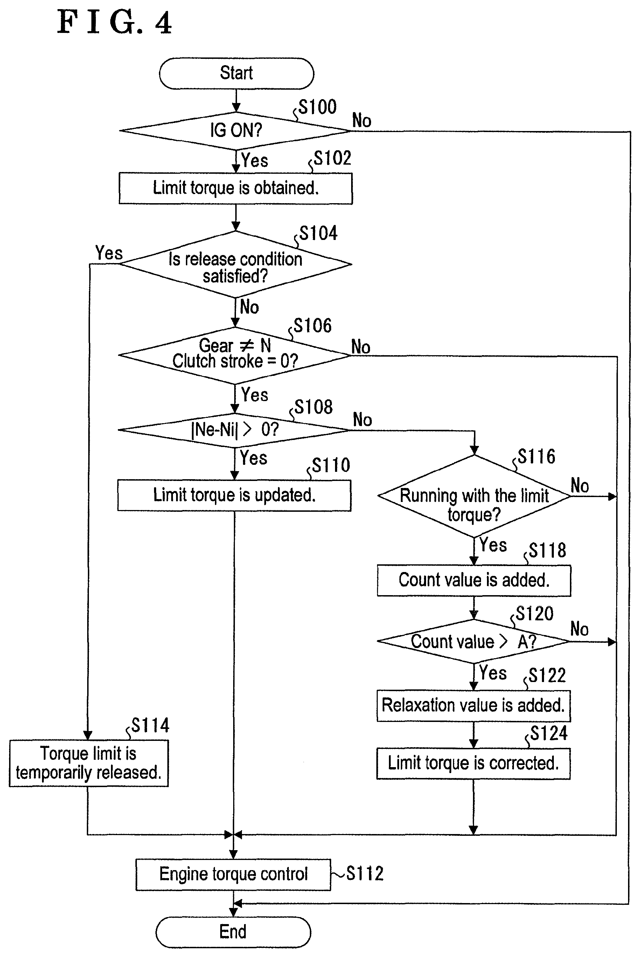

Fig. 4 is a flowchart explaining a procedure of a torque restriction control (the clutch protection processing) described above. The clutch protection processing by the engine control apparats 100 is performed in a state where the power supply of the vehicle 1 is ON, that is, an IG (an ignition) is ON. Therefore, the flow is finished once in a case where the IG is not ON (N in S100). The flow of the clutch protection processing is performed in a predetermined cycle, for example, at every several tens ms. At S100, in a case where the IG is ON (Y in S100), the control portion 108 acquires the information stored by the storage portion 106, in order to perform the clutch protection processing. At this time, in a case where the limit torque for restricting the slip has already been stored, the stored limit torque is acquired (S102). In a case where the slip does not occur before the IG of the vehicle 1 is turned ON, that is, for example, in a state where the clutch 4 and/or the friction member 43 are new or can be regarded as new, the storage portion 106 can store a maximum design torque (for example, 210 Nm) as the limit torque.

In a case where the engine torque is limited due to the clutch protection processing as described above when the torque is required depending on driving situations, the driver may feel the sense of discomfort and/or dissatisfaction. The engine control apparatus 100 of the embodiment interrupts the clutch protection processing and releases the torque limitation only in a case where a predetermined release condition is satisfied. Circumstances under which the clutch protection processing are desirably interrupted include, for example, a case where a prompt escape from, for example, an intersection is intended when turning at the intersection, in case of making a lane change, and/or in case of running on an uphill road. Specific release conditions are considered to include a case in which the driver intentionally requires large torque. For example, the specific release conditions include a case where an amount of change in an opening degree (an amount of a stepping operation) of the accelerator pedal 24 per unit of time exceeds a constant value (a predetermined position), that is, a case where the accelerator pedal 24 is stepped on suddenly. In addition, the specific release conditions includes a case where an average opening degree of the accelerator pedal 24 in a constant time period (in a predetermined time period) exceeds a constant value (a predetermined position). In other embodiment, a switch is provided in a region that is positioned deeper than a region where the opening degree of the acceleration pedal 24 is determined as 100%, and it is determined that the predetermined release condition is satisfied in a case where the switch is ON, that is, in a case where the pressing operation that is equal to or more than 100% of the pressing operation is performed. Also when performing such a releasing processing, the driver is desirably reminded that it is desirable that the clutch protection control is restored as soon as possible. The reminder may be performed in such a manner that the multi information display 110 and/or other alert apparatus keep on alerting that the clutch 4 is worn and/or that it is desirable that the release of the clutch protection control is conducted in a short time period, for example.

In addition, in other embodiment, a release switch temporarily releasing the clutch protection control is provided in the vicinity of a driver seat and the release processing is performed only in a case where the release switch is being ON. Similarly, in a case where a selection switch selecting a running mode is provided at the vehicle 1, and when, for example, an eco-mode in which a priority is given to fuel efficiency and/or a sport mode in which a priority is given to the agile running can be selected, the release processing may be performed in a case where the sport mode is selected, for example. Similarly to the aforementioned case, in a case where the release operation can be performed by the operation of the switch by the driver, the driver may be alerted that the release processing is performed in a short time period. In addition, for example, a limitation may be provided on a period of duration of the release processing and the clutch protection control may be restored automatically after a predetermined time period passed. With the application of such configurations, the protection control of the clutch 4 can be realized while an intention of the driver is accepted.

For example, in a case where a vehicle can obtain slope road inclination information and/or a vehicle payload estimation information, and the vehicle can estimate by, for example, calculation, a circumstance under which the vehicle cannot climb the slope without outputting a sufficient drive power, and when such an estimation is made, the clutch protection control may be released temporarily. In this case, because the vehicle payload estimation information can be obtained in advance, when the clutch protection control is being performed, a warning may be given not to use a slope on which the aforementioned estimation is made, and/or information on an exclusion of a route may be provided, for example, to a navigation apparatus.

In addition, in other embodiment, it may be determined whether the clutch protection control is temporarily released or not according to a gear stage (a speed) selected in the transmission 5. For example, in a case where the first speed is being selected, the clutch protection control may be released because a time period of acceleration (a length of using) is generally short at the first speed. In a case where the second or higher speed of which the length of using is relatively long is being selected, the clutch protection control may be performed.

To return to the flowchart of Fig. 4, in a case where the release condition is not satisfied (N in S104), the engine control apparatus 100 determines whether or not the clutch 4 is slipping in a case where the selected gear stage of the transmission 5 is not the neutral (N) and the clutch stroke = 0 (Y in S106). That is, the engine control apparatus 100 determines whether or not the clutch 4 is slipping in a case where the clutch 4 is in the fully-connected state and the transmission 5 is in a drive power transmittable state. Specifically, in a case where an absolute value (|Ne-Ni|) of the difference between the rotation speed Ne of the output shaft 31 of the engine 2 and the rotation speed Ni of the input shaft 32 to the transmission 5, which are acquired by the information acquisition portion 102, is larger than "0" at the detection portion 104 (Y in S108), the storage portion 106 determines that the clutch 4 is slipping and updates the limit torque (S110). Subsequently, the control portion 108 refers to the storage portion 106 and performs an engine torque control (S112). For example, in a case where the limit torque is stored at the storage potion 106 and the release condition is not satisfied, the upper limit of the output torque of the engine 2 is the stored limit torque regardless of the opening degree of the accelerator pedal 24. In addition, in a case where the output torque of the engine 2 which is required corresponding to the opening degree of the accelerator pedal 24 is equal to or less than the limit torque, an output torque control corresponding to the opening degree of the accelerator pedal 24 is performed.

In a case where the release condition is satisfied at S104 (Y in S104), when an output torque limitation of the engine 2 is performed by the clutch protection control, the torque limitation is temporarily released (S114) and the engine torque control depending on the operation amount of the accelerator pedal 24 is performed (S112).

At S106, in a case where the selected gear stage of the transmission 5 ≠ neutral (N) and the clutch stroke = 0 are not satisfied (N in S106), the control moves to S112. For example, in case of running in the half-engaged clutch state and/or in a case where the transmission 5 is in the neutral and only the rotation speed of the engine 2 needs to be obtained, the engine torque control depending on the operation amount of the accelerator pedal 24 is performed (S112).

In a case |Ne-Ni| > 0 is not satisfied at S108 (N in S108), that is, in a case where the clutch 4 is not slipping and not running at the limit torque (N in S116), the control moves to S112. In this case, the clutch 4 currently being used is not slipping at present and has not been slipped in the past, and a degree of wear of the friction member 43 is within an allowable range, and a state in which the output of the engine 2 can be sufficiently transmitted to the side of the transmission 5 is established. Consequently, the engine torque control depending on the operation amount of the accelerator pedal 24 is performed (S112).

On the other hand, in a case where the clutch 4 is not slipping in the current running but the running is continued without the limit torque being updated in a decreasing direction (Y in S116), an actual count value without slip is added for each predetermined time period (S118). For example, in a case where the "slip" does not occur for a long period of time, temperature of the clutch 4 is restricted from increasing. The lower the temperature of the friction member 43 of the clutch 4 is, the higher a friction coefficient of a friction surface is. That is, a possibility of the "slip" decreases. Therefore, in a case where an actual achievement of running for the predetermined time period or more at the limit torque serving as a boundary where the slip occurs, that is, the count value, exceeds a predetermined value A (Y in S120), the limit torque that has been used for the clutch protection control is relaxed or alleviated. For example, in a case where the limit torque has been 185 Nm, the control portion 108 adds, for example, +5 Nm as a relaxation value (S122) and controls with the limit torque 190 Nm, and the control portion 108 corrects the value of the limit torque of the storage portion 106 (S124). Then, the control portion 108 regards the updated limit torque as the upper limit torque, and the control portion 108 performs the engine torque control depending on the operation amount of the accelerator pedal 24 in a case where being equal to or less than the updated limit torque (S112). The predetermined value A at S120 can be set appropriately. The predetermined value A changes depending on an interval at which the count value is added, however, the predetermined value A may be such a value that can maintain the limit torque for 30 seconds, for example.

As a result of continuing the running at the limit torque that is after the relaxation change, in a case where the condition of S120 is satisfied without occurrence of the slip, the relaxation processing of "+5 Nm" is performed again. As described above, in a case where the relaxing processing is performed and the limit torque is shifted towards a relaxing side, a running performance of the vehicle 1 is enhanced. In a case where the "slip" occurs again as a result of relaxing the limit torque, the limit torque is updated in a direction in which the limit torque is made stricter and the clutch protection control is performed in processings after S108. However, the clutch 4 is in the worn state even in a case where the relaxing processing is performed, therefore it is ideal that the driver is alerted that maintenance is necessary. In the aforementioned example, the relaxation value is a fixed value of "+5 Nm", however, the value may be set appropriately at, for example, "+1 Nm".

In a case where the count value > A is not satisfied at S120 (N in S120), that is, in a case where whether or not the "slip" of the clutch 4 is improved cannot be determined, the processings in and after S122 are skipped and the control moves to S112. And at S112, the engine torque control depending on the operation amount of the accelerator pedal 24 is performed while the current limit torque being regarded as the upper limit (S112).

In the aforementioned flowchart, the example is explained in which whether or not the "slip" has not occurred for the predetermined time period is determined by comparing the count value and the predetermined value A with each other. However, the temperature of the clutch 4 or the temperature of the friction member 43 may be estimated, and in a case where the temperature is equal to or less than a predetermined temperature or in a case where a state that the temperature is equal to or less than the predetermined temperature continues for a predetermined time period, the limit torque may be relaxed. In this case, the estimation of the temperature may be calculated (estimated) by referring to a predetermined characteristic map on the basis of the clutch torque calculated according to the engine torque and the rotation speed (the number of rotations) of the engine, a vehicle speed, an engine water temperature, the rotation speed of the engine and the rotation speed of the input shaft 32, for example.

In the aforementioned explanation, in a case where the limit torque is relaxed, the relaxation value is the fixed value (+5 Nm). However, the relaxation value may be set depending on characteristics of the clutch 4 and/or the friction member 43. As described above, a slip phenomenon of the clutch 4 is closely related to the temperature. Thus, the relaxation value may be selected on the basis of the estimated value of the temperature of the clutch 4 or the friction member 43. For example, the relaxation value may be "a Nm" in a case where the estimated temperature is A to B°C when the relaxation processing is performed, and the relaxation value may be "b Nm" in a case where the estimated temperature is B to C°C when the relaxation processing is performed.

In a case where the clutch 4 or the friction member 43 is replaced, the stored value of the storage portion 106 is reset and the storage value corresponds to the maximum design torque.

The configurations related to the aforementioned embodiments are applicable to, for example, an automatic shift type manual transmission (AMT) at which the shift change of the manual transmission is performed by an actuator on the basis of an electric signal and/or a dual clutch transmission (DCM) provided with clutches of two systems of even number gears and odd number gears, and a similar effect can be obtained.

The aforementioned embodiments of the invention are presented as examples and are not provided to intend to limit the scope of the invention. Those new embodiments may be implemented in other various manners, and various omissions, substitution and changes may be provided without departing from the scope of the invention. This embodiments and variations thereof are included in the scope and subject matter of the invention, and are included in the invention described in the scope of claims and a range of equivalents thereof.

### EXPLANATION OF REFERENCE NUMERALS

1...vehicle, 2...engine, 4...clutch, 5...transmission, 100...engine control apparatus, 102... information acquisition portion, 104... detection portion, 106... storage portion, 108... control portion, 110...multi information display

## Claims

1. An engine control apparatus comprising:
an information acquisition portion acquiring output information indicating a rotation speed of an output shaft of an engine, input information indicating a rotation speed of an input shaft of a transmission to which a rotary force of the output shaft is transmitted via a clutch, and connection information indicating that the clutch establishes a connected state in which the output shaft side and the input shaft side are connected to each other;
a detection portion detecting a rotation speed difference between the engine side and the transmission side when the clutch is in the connected state, on the basis of a comparison between the output information and the input information;
a storage portion storing detection information corresponding to the rotation speed difference; and
a control portion limiting output of the engine on the basis of the detection information so that the rotation speed difference does not occur.

2. The engine control apparatus according to claim 1, wherein the storage portion stores output torque of the engine at the time of occurrence of the rotation speed difference which is equal to or more than a predetermined value between the output shaft and the input shaft as the detection information.

3. The engine control apparatus according to either claim 1 or 2, wherein the storage portion retains the detection information after a vehicle electric power supply is lost.

4. The engine control apparatus according to any one of claims 1 to 3, wherein in a case where the control portion limits the output of the engine on the basis of the detection information, the control portion relaxes the limitation on the output of the engine in a case where the detection information is not updated in an increasing direction for a predetermined time period.

5. The engine control apparatus according to any one of claims 1 to 4, wherein the control portion releases the limitation on the output of the engine that is based on the detection information only in a case where a running state of a vehicle satisfies a predetermined condition.

6. The engine control apparatus according to any one of claims 1 to 5, wherein in a case where the control portion is controlling the output of the engine on the basis of the detection information, the control portion causes content of the limitation to be outputted at an alert apparatus.

7. The engine control apparatus according to any one of claims 1 to 6, wherein the control portion calculates the rotation speed difference in a case where a gear state of the transmission is other than a neutral and the clutch is in an unoperated state.

8. The engine control apparatus according to any one of claims 1 to 7, wherein, in a case where slip is not generated at the clutch, the control portion stores on the storage portion a maximum design torque which is transmittable by the clutch, the maximum design torque being stored as a limit torque.

9. The engine control apparatus according to claim 6, wherein, in a case where the control portion is limiting the output of the engine, the control portion outputs the content of the limitation at the same time with outputting a design capability which is transmittable by the clutch.

10. The engine control apparatus according to any one of claims 1 to 9, wherein the control portion releases the limitation on the output of the engine in a case where an amount of change in an amount of a stepping operation of an accelerator pedal per unit of time exceeds a predetermined position or in a case where an average amount of the stepping operation of the accelerator pedal in a predetermined time period exceeds a predetermined value.
